# EUROPEAN PATENT APPLICATION

(11) **EP 4 776 476 A1**
(43) Date of publication of application: **15.07.2026**
(21) Application number: 24870414.0
(22) Date of filing: 06.09.2024
(51) Int. Cl.: H02K 1/20, H02K 9/193, H02K 5/20, H02K 7/116, B60K 17/12

(54) **STATOR LAMINATION HAVING CIRCUMFERENTIAL FLOW CHANNELS, MOTOR, POWERTRAIN, AND ELECTRIC VEHICLE**

(30) Priority: 26.09.2023 CN 202311288722
(71) Applicant: Huawei Digital Power Technologies Co., Ltd., Shenzhen, Guangdong 518043 (CN)
(72) Inventor: ZHANG, Bowen, Shenzhen, Guangdong 518043 (CN); HUANGFU, Yuzhao, Shenzhen, Guangdong 518043 (CN); YAN, Xu, Shenzhen, Guangdong 518043 (CN); LI, Haojie, Shenzhen, Guangdong 518043 (CN)
(74) Representative: Gill Jennings & Every LLP
(86) International application number: PCT/CN2024/117496
(87) International publication number: WO 2025/066868

(57) **Abstract**

This application relates to the field of motor technologies, and provides a stator lamination having circumferential flow channels, a motor, powertrain, and an electric vehicle. The stator lamination includes a plurality of communication holes and a plurality of circumferential flow channels. In an axial direction of a stator, each communication hole and each circumferential flow channel run through the stator lamination. In a circumferential direction of the stator, the plurality of communication holes are spaced apart, the plurality of circumferential flow channels are spaced apart, and each circumferential flow channel is in communication with at least two communication holes. In a radial direction of the stator, a distance between a center of the circumferential flow channel and a center of the stator lamination is greater than a distance between a center of the communication hole and the center of the stator lamination. After entering the motor, a cooling medium can flow in a circumferential direction of the motor, to optimize a heat dissipation effect of the motor.

## Description

### CROSS-REFERENCE TO RELATED APPLICATIONS

This application claims priority to Chinese Patent Application No. 202311288722.7, filed with the China National Intellectual Property Administration on September 26, 2023 and entitled "STATOR LAMINATION HAVING CIRCUMFERENTIAL FLOW CHANNELS, MOTOR, POWERTRAIN, AND ELECTRIC VEHICLE", which is incorporated herein by reference in its entirety.

### TECHNICAL FIELD

This application relates to the field of motor technologies, and in particular, to a stator lamination having circumferential flow channels, a motor, a powertrain, and an electric vehicle.

### BACKGROUND

With development of science and technology, power density of a motor is increasingly high, while a size of the motor is increasingly small. Higher power density of the motor imposes a higher requirement on heat dissipation of the motor.

When the motor operates, a heat loss of a stator core is a significant heat source of the motor, and oil-cooling heat dissipation may be performed on a stator through a heat dissipation channel provided in the stator of the motor. Currently, heat dissipation manners of the stator of the motor in conventional technologies are poor, and a cooling effect needs to be improved.

### SUMMARY

According to a stator lamination having circumferential flow channels, a motor, a powertrain, and an electric vehicle provided in embodiments of this application, after entering the motor, a cooling medium can flow in a circumferential direction of the motor, so that the cooling medium can be sprayed to an end portion of a stator winding from a specific circumferential angle, thereby optimizing a heat dissipation effect of the motor.

According to a first aspect, an embodiment of this application provides a stator lamination having circumferential flow channels. The stator lamination may be axially stacked to form a stator core of a motor. The stator lamination includes a plurality of communication holes and a plurality of circumferential flow channels. In an axial direction of the stator lamination, each communication hole and each circumferential flow channel run through the stator lamination. In a circumferential direction of the stator lamination, the plurality of communication holes are spaced apart, the plurality of circumferential flow channels are spaced apart, and each circumferential flow channel is in communication with at least two communication holes, so that a cooling medium can flow in a circumferential direction of a stator in the circumferential flow channels. In a radial direction of the stator lamination, a distance between a center of the circumferential flow channel and a center of the stator lamination is greater than a distance between a center of the communication hole and the center of the stator lamination. Both the circumferential flow channel and the communication hole are a part of an internal channel of the stator. The cooling medium can flow in the circumferential flow channel and the communication hole to implement liquid cooling heat dissipation for the stator. The circumferential flow channel can communicate at least two communication holes to allow the cooling medium to flow circumferentially in the stator. In a design of the motor, the circumferential flow channel is adjusted based on a heat dissipation requirement, so that the cooling medium can flow to an end portion of the stator at a preset angle in the circumferential direction of the stator, and can be sprayed to an end portion of a stator winding from a specific circumferential angle, thereby achieving a better liquid cooling heat dissipation effect of the motor.

In a possible implementation, the stator lamination includes a groove that runs through the stator lamination in the axial direction of the stator lamination, and an outer circumferential surface of the stator lamination includes an opening of the groove, that is, the groove is in communication with the outer circumferential surface of the stator lamination. In the radial direction of the stator lamination, a bottom of the groove is in communication with at least two communication holes, and the groove is the circumferential flow channel. The groove of the stator lamination can communicate the outer circumferential surface of the stator lamination with the communication hole to allow the cooling medium to flow in the radial direction of the stator lamination.

In a possible implementation, in the circumferential direction of the stator lamination, one communication hole is in communication with the bottom of the groove, and another communication hole adjacent to the communication hole is isolated from the groove. Only one of two adjacent communication holes is in communication with the groove, so that the cooling medium in one of the communication holes can be in communication with the outer circumferential surface of the stator lamination through the groove, thereby changing a flow direction of the cooling medium.

In the radial direction of the stator lamination, a distance between the communication hole and the bottom of the groove is greater than a size of the communication hole, and the communication hole is closer to the center of the stator lamination.

In a possible implementation, in the circumferential direction of the stator lamination, a size of the circumferential flow channel is greater than a size of the communication hole. The circumferential flow channel can extend in the circumferential direction of the stator lamination, to communicate at least two communication holes.

In the radial direction of the stator lamination, a size of the circumferential flow channel is greater than the size of the communication hole, and the circumferential flow channel can accommodate more cooling medium than the communication hole.

According to a second aspect, an embodiment of this application provides a motor, where a stator of the motor includes a first lamination and at least one stator lamination according to any one of the first aspect. The first lamination includes a plurality of flow holes, each flow hole runs through the first lamination in an axial direction of the stator, and the plurality of flow holes are spaced apart in a circumferential direction of the stator. In the axial direction of the stator, the first lamination and the stator lamination are adjacently arranged, and the flow hole is in communication with the circumferential flow channel or the communication hole, so that a flow channel extending in the axial direction of the stator is formed for the cooling medium to flow.

In a possible implementation, in the axial direction of the stator, the first lamination is arranged between two first laminations. A circumferential flow channel of one stator lamination is a groove, and an outer circumferential surface of the stator lamination includes an opening of the groove. A circumferential flow channel of the other stator lamination is a through hole, and in the circumferential direction of the stator, a size of the through hole is greater than a size of the communication hole. A communication hole of the first lamination can communicate communication holes of the two stator laminations, or communicate circumferential flow channels of the two stator laminations, or communicate a circumferential flow channel with a communication hole.

In a possible implementation, there are two stator laminations, and the two stator laminations are adjacently arranged in the axial direction of the stator. In the axial direction of the stator, a circumferential flow channel of one stator lamination is in communication with a circumferential flow channel of the other adjacent stator lamination, and a communication hole of the one stator lamination is in communication with a circumferential flow channel of the other adjacent stator lamination. In the circumferential direction of the stator, a structure between two adjacent circumferential flow channels of the one stator lamination partially blocks a circumferential flow channel of the other adjacent stator lamination. The circumferential flow channels of the two stator laminations are arranged in a staggered manner in the circumferential direction of the stator and are sequentially in communication, so that a circumferential liquid cooling channel that is continuous in the circumferential direction of the stator can be formed.

In a possible implementation, the stator includes at least one second lamination. The second lamination includes a plurality of liquid outlet holes, each liquid outlet hole runs through the second lamination in the axial direction of the stator, and the plurality of liquid outlet holes are spaced apart in the circumferential direction of the stator. In the axial direction of the stator, the second lamination is arranged on a side that is of the other stator lamination and that is away from the first lamination, and the circumferential flow channel is in communication with at least two liquid outlet holes that are adjacent to each other in the circumferential direction of the stator. The second lamination is equivalent to an axial end plate of the stator, and the cooling medium can fall on an end winding after being sprayed out from a liquid outlet to dissipate heat for the end winding. At least two liquid outlets that are adjacent to each other in the circumferential direction of the stator are in communication with the circumferential flow channel, to facilitate implementation of a non-uniform oil injection effect at the end portion of the stator.

In a possible implementation, the stator includes at least one third lamination. The third lamination includes a plurality of internal cooling holes and a plurality of external cooling holes. In the circumferential direction of the stator, the plurality of internal cooling holes are spaced apart, and the plurality of external cooling holes are spaced apart. In a radial direction of the stator, a distance between the internal cooling hole and a center of the stator is less than a distance between the external cooling hole and a center of the third lamination. In the axial direction of the stator, the third lamination is arranged on a side that is of the one stator lamination and that is away from the first lamination, the external cooling hole is in communication with the circumferential flow channel, and the internal cooling hole is in communication with the communication hole. The internal cooling hole may be regarded as an outer-layer cooling channel of the stator, and the internal cooling hole may be regarded as an inner-layer cooling channel of the stator. The circumferential flow channel of the stator lamination can communicate the inner-layer cooling channel with the outer-layer cooling channel, to implement double-layer liquid cooling heat dissipation.

Specifically, a quantity of the external cooling holes is greater than a quantity of the circumferential flow channels, and each circumferential flow channel may be simultaneously in communication with at least one external cooling hole.

In some possible implementations, in the radial direction of the stator, the external cooling hole is in communication with an outer circumferential surface of the third lamination, so that outer-layer cooling of the stator provided to a circumferential surface of the stator.

According to a third aspect, a powertrain is provided. The powertrain includes a reducer or a transmission and the motor according to any one of the first aspect and the implementations of the first aspect. A motor shaft of the motor is in transmission connection to an input shaft of the reducer or an input shaft of the transmission. Because the motor has good heat dissipation performance, heat dissipation performance and power performance of the powertrain can be improved.

According to a fourth aspect, an electric vehicle is provided. In this application, the electric vehicle includes wheels, a transmission mechanism, and the powertrain according to any one of the second aspect and the implementations of the second aspect. The powertrain drives the wheels through the transmission mechanism. The electric vehicle provided in this application has good heat dissipation performance and power performance.

For technical effects that can be achieved according to the second aspect to the fourth aspect, refer to the descriptions of the technical effects that can be achieved according to corresponding design solutions in the first aspect. Details are not described herein again in this application.

### BRIEF DESCRIPTION OF DRAWINGS

FIG. 1 is a diagram of a structure of an electric vehicle according to an embodiment of this application;
FIG. 2 is a diagram of a structure of a powertrain according to an embodiment of this application;
FIG. 3 is a diagram of a structure of a stator of a motor according to an embodiment of this application;
FIG. 4 is an exploded view of a stator of a motor according to an embodiment of this application;
FIG. 5a is a diagram of a structure of a stator lamination according to an embodiment of this application;
FIG. 5b is a diagram of a structure of another stator lamination according to an embodiment of this application;
FIG. 6 is a diagram of a structure of a portion of laminations of a stator according to an embodiment of this application;
FIG. 7a is a diagram of a structure of a stator core of a stator according to an embodiment of this application;
FIG. 7b is an exploded view of a partial structure of a stator core of a stator according to an embodiment of this application;
FIG. 8a is a diagram of a structure of two stator laminations according to an embodiment of this application;
FIG. 8b is a diagram of a structure of a simulation model of a circumferential liquid cooling channel formed by two stator laminations according to an embodiment of this application;
FIG. 9a is a diagram of a structure of two stator laminations and a first lamination according to an embodiment of this application;
FIG. 9b is a cross-sectional diagram of two stator laminations and a first lamination according to an embodiment of this application;
FIG. 9c is an enlarged view of details at A in FIG. 9b;
FIG. 10a is a diagram of a structure of a stator lamination and a third lamination according to an embodiment of this application;
FIG. 10b is an enlarged view of details at B in FIG. 10a;
FIG. 10c is a diagram of a structure of two stator laminations and a third lamination according to an embodiment of this application;
FIG. 10d is a diagram of a cooling medium flow channel formed by a stator according to an embodiment of this application;
FIG. 11a is a diagram of a structure of two stator laminations, two first laminations, and a third lamination according to an embodiment of this application;
FIG. 11b is a cross-sectional diagram of a partial structure of a stator according to an embodiment of this application;
FIG. 11c is an enlarged view of details at C1 in FIG. 11b;
FIG. 11d is an enlarged view of details at C2 in FIG. 11b;
FIG. 12a is a cross-sectional diagram of a stator according to an embodiment of this application;
FIG. 12b is an enlarged view of details at D1 in FIG. 12a;
FIG. 12c is an enlarged view of details at D2 in FIG. 12a; and
FIG. 12d is a diagram of a structure of a simulation model of a cooling medium flow channel of a stator according to an embodiment of this application.

Reference numerals:
1000: powertrain; 2000: transmission mechanism; 3000: wheel; 100: motor; 200: reducer; 10: stator; 20: stator winding; 30: rotor; 40: motor shaft; 1: housing; 11: radial groove; 13: liquid inlet pipe; 101: liquid inlet; 102: liquid outlet; 2: lamination; 21: center hole; 22: lamination slot; 24, 24a, and 24b: communication hole; 25: through hole; 26: groove; 27: flow hole; 28: liquid outlet hole; 291: internal cooling hole; 292: external cooling hole; 2a and 2b: stator lamination; 2c: first lamination; 2d: second lamination; 2e: third lamination.

### DESCRIPTION OF EMBODIMENTS

With the development of science and technology, motors are developing toward a small size and a high power. However, heat dissipation of the motor is one of the bottlenecks that currently limit an increase in power density of the motor. When the motor operates at a high speed, a heat loss of a stator core is a significant heat source. Cooling oil is usually used to dissipate heat for the stator core. Specifically, oil may be passed through the back of the stator core and sprayed onto an end coil pack of a stator winding, to dissipate heat for a stator. However, a current heat dissipation manner has an inadequate heat dissipation effect, and cannot meet a high heat dissipation requirement due to an increase in power density of the motor.

Based on this, embodiments of this application provide a stator lamination having circumferential flow channels, a motor, a powertrain, and an electric vehicle. A cooling medium can be sprayed to an end portion of a stator winding from a specific circumferential angle, thereby optimizing a heat dissipation effect of the motor, and then improving power performance and prolonging a service life of the powertrain.

To make the objectives, technical solutions, and advantages of this application clearer, the following further describes this application in detail with reference to the accompanying drawings.

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly.

Reference to "an embodiment", "some embodiments", or the like described in this specification means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

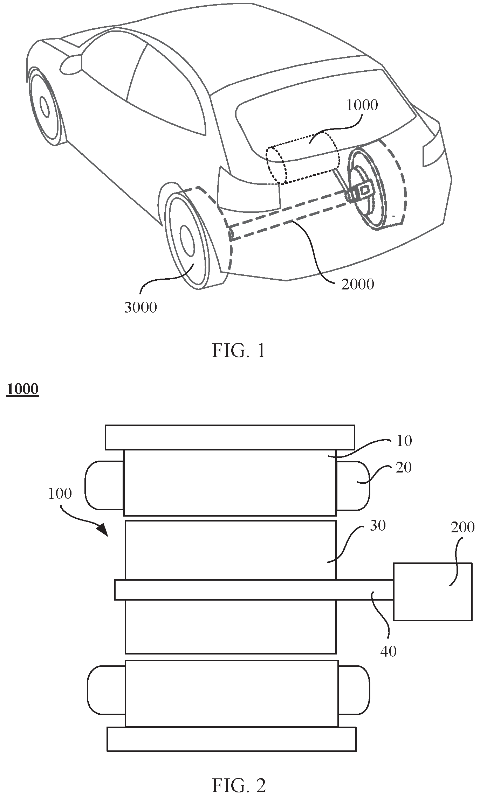

FIG. 1 is a diagram of an electric vehicle according to an embodiment of this application. Refer to FIG. 1. The electric vehicle provided in this embodiment of this application includes a powertrain 1000, a transmission mechanism 2000, and wheels 3000. The powertrain 1000 drives the wheels 3000 through the transmission mechanism 2000. The powertrain 1000 is configured to convert electric energy into mechanical energy. The transmission mechanism 2000 is configured to be in transmission connection to the powertrain 1000 and the wheels 3000.

FIG. 2 is a diagram of a powertrain according to an embodiment of this application. As shown in FIG. 2, a motor 100 is configured to drive the transmission mechanism 2000 of the electric vehicle through the reducer 200. The motor 100 includes a stator 10, a stator winding 20, a rotor 30, and a motor shaft 40. The rotor 30 is coaxially fastened to the motor shaft 40, and the motor shaft 40 is in transmission connection to the reducer 200. The stator 10 is sleeved outside the rotor 30, and the stator winding 20 is wound around the stator 10. The stator winding 20 has a portion located inside the stator 10 and a portion located outside the stator 10. The portion that is of the stator winding 20 and that is located outside a stator slot protrudes from an axial side surface of the stator 10. The stator winding 20 is energized, so that a magnetic field can be generated at a center of the stator 10, and the rotor 30 can rotate around a shaft axis of the motor shaft 40 in the magnetic field. The reducer 200 may alternatively be a transmission. It should be understood that an axial direction of the stator 10 is also an axial direction of the motor 100, a radial direction of the stator 10 is also a radial direction of the motor 100, and a circumferential direction of the stator 10 is also a circumferential direction of the motor 100.

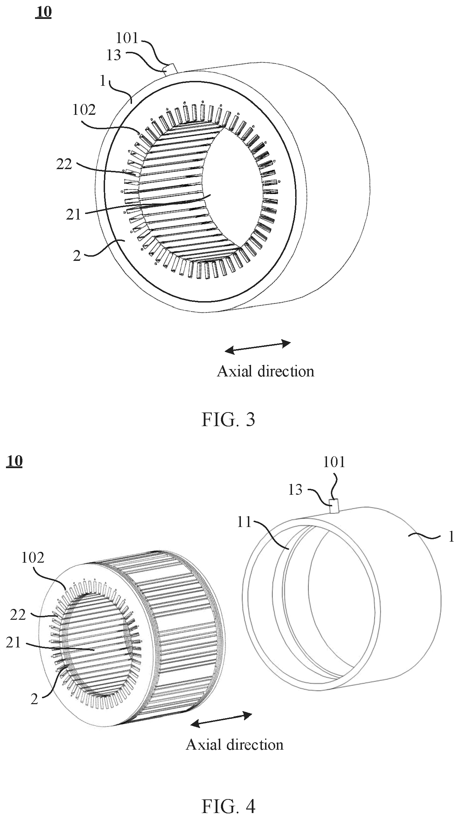

The motor 100 provided in this embodiment of this application is a motor in which a stator discharges liquid for winding cooling, and specifically means that a cooling medium used to dissipate heat for the stator 10 may be simultaneously sprayed to an end winding of the stator winding 20 to dissipate heat. As shown in FIG. 3, the stator 10 includes a housing 1 and a plurality of laminations 2, and the plurality of laminations 2 are arranged in an axial direction of the stator 10 to form a stator core. Each lamination 2 includes a center hole 21 and a plurality of lamination slots 22, and there are a plurality of lamination slots 22. The center hole 21 is located at a central position of the lamination 2. Each lamination slot 22 extends in a radial direction of the lamination 2 and is in communication with the center hole 21, and a bottom of the lamination slot 22 is away from a center of the lamination 2. In a circumferential direction of the lamination 2, the plurality of lamination slots 22 are spaced apart. After the plurality of laminations 2 are stacked in the axial direction of the stator 10, the center holes 21 of the plurality of laminations 2 can be in communication with each other to form space for accommodating the rotor 30, the lamination slots 22 of the plurality of laminations 2 are separately in communication with each other to form stator slots, and structures between any two lamination slots 22 can be stacked to form stator teeth of the stator 10.

The housing 1 includes a liquid inlet pipe 13, and the liquid inlet pipe 13 is a hollow pipe. One end of the liquid inlet pipe 13 is fastened to an outer circumferential surface of the housing 1, and a port at one end that is of the liquid inlet pipe 13 and that is away from the outer circumferential surface of the housing 1 forms a liquid inlet 101. An axial end surface of the stator 10 includes a plurality of liquid outlets 102, and the liquid outlets 102 are specifically formed on a lamination 2 located at an axial end portion of the stator 10. For example, the plurality of liquid outlets 102 are spaced apart in a circumferential direction of the motor 100. A quantity and an arrangement rule of the liquid outlets 102 may be adjusted based on an actual cooling requirement and a process condition. The stator 10 has a channel for the cooling medium to flow, and the liquid inlet 101 and the plurality of liquid outlets 102 each are in communication with the channel. The cooling medium may be injected into the channel in the stator 10 through the liquid inlet 101, and the cooling medium flows to the plurality of liquid outlets 102 through the flow channel in the stator 10 and is sprayed out from the plurality of liquid outlets 102. When flowing in the stator 10, the cooling medium can dissipate heat for the stator winding 20 through the stator 10. After being sprayed out from the liquid outlets 102, the cooling medium can be sprayed to the stator winding 20 located at an end portion of the stator 10.

FIG. 4 shows a structure in which the housing 1 of the stator 10 is separated from the plurality of laminations 2. The plurality of laminations 2 are stacked in the axial direction of the stator 10 to form a stator core, and the housing 1 is circumferentially arranged around and seals an exterior of the stator core. Each lamination 2 includes a center hole 21 and a plurality of lamination slots 22, and the plurality of lamination slots 22 are spaced apart in a circumferential direction of the stator 10 and are in communication with the center hole 21. The housing 1 is cylindrical, an inner wall of the housing 1 includes a first radial groove 11, the radial groove 11 is formed by a groove provided on the inner wall of the housing 1, the radial groove 11 extends in a circumferential direction of the housing 1, and a bottom of the radial groove 11 is in communication with the liquid inlet 101 through the liquid inlet pipe 13. When the housing 1 is sleeved on an outer circumferential surface of the stator core that includes the plurality of laminations 2, and the outer circumferential surface of the stator core includes a flow channel, the radial groove 11 is in communication with the flow channel of the outer circumferential surface of the stator core. It should be understood that an axial direction of the stator 10 is also an axial direction of the lamination 2, a radial direction of the stator 10 is also a radial direction of the lamination 2, and a circumferential direction of the stator 10 is also a circumferential direction of the lamination 2.

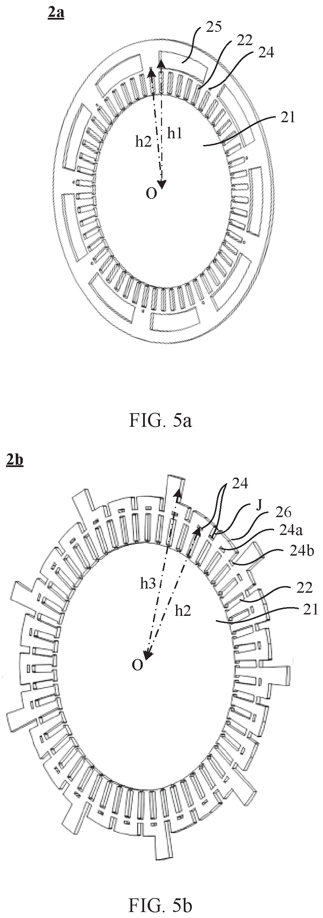

The plurality of laminations 2 include a stator lamination 2a shown in FIG. 5a, and the stator lamination 2a includes a plurality of communication holes 24 and a plurality of through holes 25. In the axial direction of the stator 10, each communication hole 24 and each through hole 25 separately run through the stator lamination 2a. In the circumferential direction of the stator 10, the plurality of communication holes 24 are spaced apart, the plurality of through holes 25 are spaced apart, and each through hole 25 is in communication with at least two communication holes 24. In the radial direction of the stator 10, a distance h1 between a center of the through hole 25 and a center O of the stator lamination 2a is greater than a distance h2 between a center of the communication hole 24 and the center O of the stator lamination 2a. In the radial direction of the stator 10, a size of the through hole 25 is greater than a size of the communication hole 24, and the through hole 25 has large accommodation space. The communication hole 24 and the through hole 25 are a portion of an internal flow channel of the stator 10, and the cooling medium may flow through the communication hole 24 and the through hole 25. In the circumferential direction of the stator 10, a size of each through hole 25 is greater than a size of the communication hole 24. When entering the through hole 25, the cooling medium may flow in the through hole 25 in the circumferential direction of the stator 10. In a direction perpendicular to the axial direction of the stator 10, the through hole 25 is peripherally enclosed. In the stator lamination 2a shown in FIG. 5a, in the circumferential direction of the stator 10, the plurality of through holes 25 are spaced apart and distributed around the circumference of the stator 10, and one communication hole 24 is provided between any two adjacent through holes 25. In the circumferential direction of the stator 10, a diameter of the through hole 25 is greater than a size of a structure between any two through holes 25. A distance between the through hole 25 and the center hole 21 is less than a distance between an outer circumferential surface of the stator lamination 2a and the center hole 21.

The plurality of laminations 2 include another stator lamination 2b shown in FIG. 5b. The stator lamination 2b includes a groove 26 that runs through the stator lamination 2b in the axial direction of the stator 10, and an outer circumferential surface of the stator lamination 2b includes an opening of the groove 26. In the radial direction of the stator 10, a bottom of the groove 26 is in communication with at least two communication holes 24. For ease of understanding, FIG. 5b shows an example in which one of the communication holes 24 is in communication with the groove 26, and the communication hole 24 is separated from the groove 26 by a dashed line indicating a separation. In the radial direction of the stator 10, a distance between a side wall that is of the communication hole 24 and that is close to the stator lamination 2b and the bottom of the groove 26 is greater than the size of the communication hole 24, and the bottom of the groove 26 is in communication with the communication hole 24 through a radial flow channel J. For ease of understanding, the radial flow channel J is separated from the bottom of the groove 26 by a dashed line indicating a separation. In the radial direction of the stator 10, a distance h3 between a center of the groove 26 and the center O of the stator lamination 2a is greater than the distance h2 between the center of the communication hole 24 and the center O of the stator lamination 2a. The groove 26 and the through hole 25 are a portion of the internal flow channel of the stator 10, and the cooling medium may flow through the communication hole 24 and the groove 26. In the circumferential direction of the stator 10, a size of each groove 26 is greater than the size of the communication hole 24. When entering the groove 26, the cooling medium may flow in the groove 26 in the circumferential direction of the stator 10. In the radial direction of the stator 10, a size of the groove 26 is greater than the size of the communication hole 24, and the groove 26 has large accommodation space. For example, as shown in FIG. 5b, in the circumferential direction of the stator 10, one communication hole 24b is in communication with the bottom of the groove 26, and another communication hole 24a adjacent to the communication hole 24b is isolated from the groove 26. In the stator lamination 2b shown in FIG. 5b, one groove 26 is in communication with three communication holes 24. In the circumferential direction of the stator 10, a plurality of grooves 26 are distributed around the circumference of the stator 10. A structure between any two adjacent grooves 26 forms a protrusion, and an edge of the protrusion is an edge of the circumferential surface of the stator lamination 2b. When the stator 10 is assembled, in the radial direction of the stator 10, the structure between two adjacent grooves 26 is configured to be welded and fastened to an outer circumferential surface of another lamination 2.

Refer to FIG. 5a and FIG. 5b together. Some lamination 2 in the motor 100 provided in this embodiment of this application include circumferential flow channels. The circumferential flow channel may be the through hole 25 shown in FIG. 5a, or may be the groove 26 in FIG. 5b. In the circumferential direction of the stator 10, a size of the circumferential flow channel is greater than the size of the communication hole 24. The cooling medium entering the circumferential flow channel may flow in the circumferential flow channel in the circumferential direction of the stator 10. A quantity, a shape, and a size of the circumferential flow channel may be designed based on a cooling requirement of the end winding of the motor 100, to implement liquid spray cooling for an end portion of the stator winding of the motor 100. In specific application, the stator 10 of the motor 100 may include both at least one stator lamination 2a and at least one stator lamination 2b, or may include only at least one stator lamination 2a, or may include only at least one stator lamination 2b, to implement circumferential flow of the cooling medium in the stator 10.

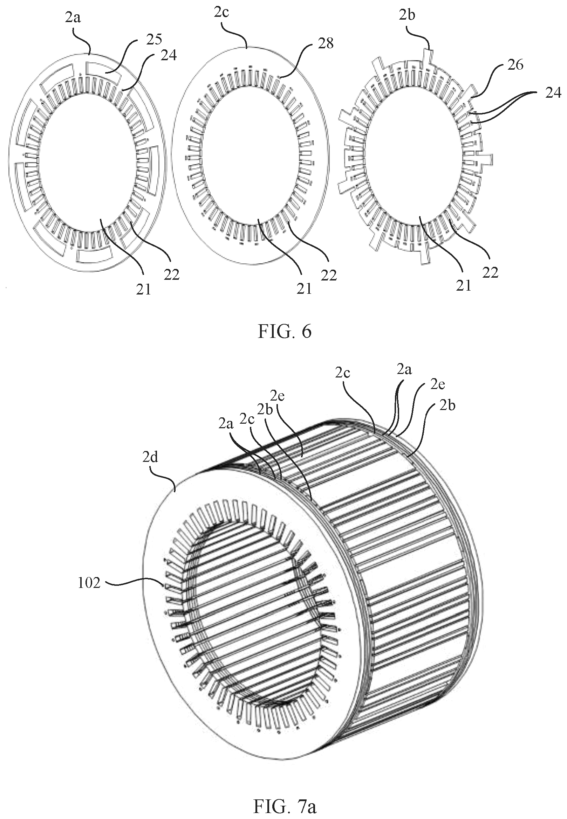

FIG. 6 shows an example in which the plurality of laminations 2 of the stator 10 includes a first lamination 2c and at least two stator laminations, where the stator lamination is the stator lamination 2a or the stator lamination 2b. For example, the two stator laminations in FIG. 6 are respectively a stator lamination 2a and a stator lamination 2b, and the first lamination 2c is arranged between the stator lamination 2a and the stator lamination 2b in an axial direction of the stator 10. The first lamination 2c includes a plurality of flow holes 27, each flow hole 27 runs through the first lamination 2c in the axial direction of the stator 10, and the plurality of flow holes 27 are spaced apart in a circumferential direction of the stator 10. In the axial direction of the stator 10, the first lamination 2c and the stator lamination are adjacently arranged, and the flow hole 27 is in communication with the circumferential flow channel or the communication hole 24. Specifically, between the first lamination 2c and the stator lamination 2a, the flow hole 27 may be in communication with the communication hole 24, or the flow hole 27 is in communication with the through hole 25 serving as the circumferential flow channel. Between the first lamination 2c and the stator lamination 2b, the flow hole 27 may be in communication with the communication hole 24, or the flow hole 27 is in communication with the groove 26 serving as the circumferential flow channel. The first lamination 2c is arranged between the stator lamination 2a and the stator lamination 2b, and can guide a cooling medium flowing through the stator lamination 2a to the stator lamination 2b. A quantity of the through holes 25 of the stator lamination 2a and a quantity of the communication holes 24 of the stator lamination 2a are less than a quantity of the flow holes 27 of the first lamination 2c, and a quantity of the grooves 26 of the stator lamination 2b and a quantity of the communication holes 24 of the stator lamination 2b are less than the quantity of the flow holes 27 of the first lamination 2c. For example, the quantity of the flow holes 27 of the first lamination 2c is half of that of the lamination slots 22, each flow hole 27 is spaced apart from one lamination slot 22 in a radial direction of the stator 10. In the first lamination 2c, one flow hole 27 is provided corresponding to every other lamination slot 22.

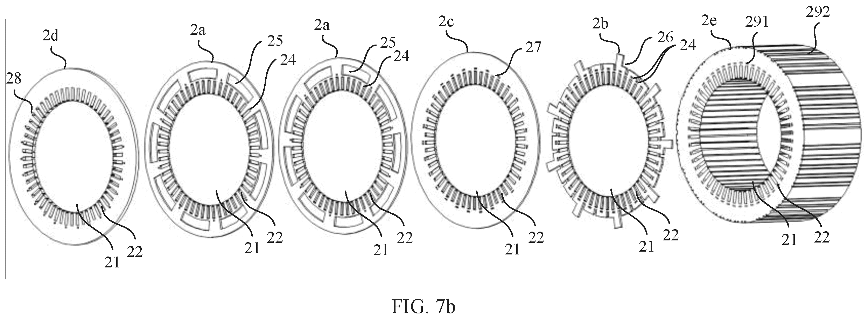

FIG. 7a shows a stator core of the stator 10, and FIG. 7b is an exploded view of a partial structure of the stator 10 shown in FIG. 7a. The plurality of laminations 2 of the stator 10 include a first lamination 2c, a second lamination 2d, a third lamination 2e, and a plurality of stator laminations, and the plurality of stator laminations specifically include two stator laminations 2a and at least one stator lamination 2b. In the axial direction of the stator 10, the first lamination 2c is arranged between the stator lamination 2a and the stator lamination 2b, the second lamination 2d is adjacently arranged on a side that is of the two stator lamination 2a and that is away from the first lamination 2c, and the third lamination 2e is adjacently arranged on a side that is of the stator lamination 2b and that is away from the first lamination 2c. The second lamination 2d is located at an axial end portion of the stator 10, and may serve as an end cover of the stator 10. Liquid outlets 102 are located on a surface of a side that is of the second lamination 2d and that is away from the stator lamination 2a. There may be one or more first laminations 2c, one or more second laminations 2d, one or more third laminations 2e, and one or more stator laminations 2b.

Refer to FIG. 7a and FIG. 7b together. The second lamination 2d includes a plurality of liquid outlet holes 28, each liquid outlet hole 28 runs through the second lamination 2d in the axial direction of the stator 10, and the plurality of liquid outlet holes 28 are spaced apart in a circumferential direction of the stator 10. In the axial direction of the stator 10, a port at one end that is of the liquid outlet hole 28 that is away from the stator lamination 2a is the liquid outlet 102 of the stator 10. The second lamination 2d is arranged on the side that is of the stator lamination 2a and that is away from the first lamination 2c, and a circumferential flow channel formed by the through hole 25 of the stator lamination 2a is in communication with at least two liquid outlet holes 28 that are adjacent to each other in the circumferential direction of the stator 10. A position and a quantity of the liquid outlet holes 28 may be adjusted based on an arrangement direction of the motor 100 and a location of a winding hot spot, so that a cooling medium may be sprayed to a hottest region of an end winding, thereby improving heat dissipation efficiency.

The third lamination 2e includes a plurality of internal cooling holes 291 and a plurality of external cooling holes 292. In the circumferential direction of the stator 10, the plurality of internal cooling holes 291 are spaced apart, the plurality of external cooling holes 292 are spaced apart, and the external cooling holes 292 are in communication with an outer circumferential surface of the third lamination 2e. A quantity of the external cooling holes 292 is greater than a quantity of through holes 25 of the stator lamination 2a, and the quantity of the external cooling holes 292 is also greater than a quantity of grooves 26 of the stator lamination 2b.

In the radial direction of the stator 10, a distance between the internal cooling hole 291 and a center of the third lamination 2e is less than a distance between the external cooling hole 292 and the center of the third lamination 2e. The cooling medium flowing through the external cooling holes 292 may dissipate heat for the outer circumferential surface of the third lamination 2e, and the cooling medium flowing through the internal cooling holes 291 may dissipate heat for an interior of the third lamination 2e. That is, the internal cooling holes 291 and the external cooling holes 292 may respectively form, on the third lamination 2e, an internal cooling channel and an external cooling channel that are arranged in the radial direction of the stator 10, thereby improving a liquid cooling heat dissipation effect of the third lamination 2e. In the axial direction of the stator 10, the third lamination 2e is arranged on the side that is of the stator lamination 2b and that is away from the first lamination 2c, the external cooling hole 292 is in communication with a circumferential flow channel formed by the groove 26 of the stator lamination 2b, and the internal cooling hole 291 is in communication with a communication hole 24 of the stator lamination 2b. When the stator lamination 2b and the third lamination 2e are adjacently arranged, the groove 26 of the stator lamination 2b is in communication with at least one external cooling hole 292 of the third lamination 2e, and the communication hole 24 of the stator lamination 2b is in communication with the internal cooling hole 291 of the third lamination 2e, so that the stator lamination 2b can communicate the internal cooling hole 291 of the third lamination 2e with the plurality of external cooling holes 292 of the third lamination 2e.

As shown in FIG. 7b, two stator laminations 2a are illustrated herein, and each stator lamination 2a includes a plurality of communication holes 24 and a plurality of through holes 25. For example, in the circumferential direction of the stator 10, one communication hole 24 is arranged between any two adjacent through holes 25. In the circumferential direction of the stator 10, a quantity of the through holes 25 of the stator lamination 2a is less than a quantity of the internal cooling holes 291 of the third lamination 2e and a quantity of flow holes 27 of the first lamination 2c.

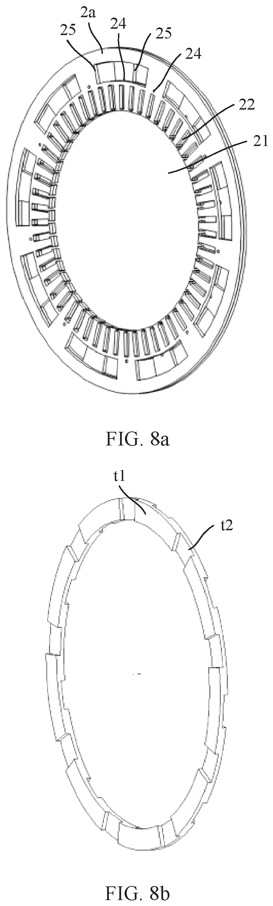

FIG. 8a shows a structure of the two stator laminations 2a arranged in the axial direction of the stator 10. As shown in FIG. 8a, in the axial direction of the stator 10, a through hole 25 of one stator lamination 2a is in communication with a through hole 25 of the other adjacent stator lamination 2a, and a communication hole 24 of one stator lamination 2a is in communication with the through hole 25 of the other adjacent stator lamination 2a. In the circumferential direction of the stator 10, a structure between two adjacent through holes 25 of one stator lamination 2a partially blocks the through hole 25 of the other adjacent stator lamination 2a. For example, the two stator laminations 2a are offset from each other by a specific angle in the circumferential direction of the stator 10, so that the plurality of through holes 25 of the two stator laminations 2a are distributed in a staggered manner in the circumferential direction of the stator 10. For example, in the axial direction of the stator 10, each through hole 25 of one stator lamination 2a is in communication with two adjacent through holes 25 of the other stator lamination 2a. After the through holes 25 of the two stator laminations 2a are in communication with each other, a circumferentially continuous channel can be formed between the first lamination 2c and the second lamination 2d, and the cooling medium can flow in the channel in the circumferential direction of the stator 10.

With reference to FIG. 8a, FIG. 8b shows an example of a structure of a simulation model of the circumferentially continuous channel formed by the two stator laminations 2a. As shown in FIG. 8b, the channel is in an annular shape and is formed by alternately communicating a plurality of gaps t1 with a plurality of gaps t2 in the circumferential direction of the stator 10. The gap t1 is space corresponding to the through hole 25 of one stator laminations 2a, and the gap t2 is space corresponding to the through hole 25 of the other stator laminations 2a. Any two communicating gaps t1 and t2 are in communication with each other in the axial direction of the stator 10. The channel is formed between the first lamination 2c and the second lamination 2d.

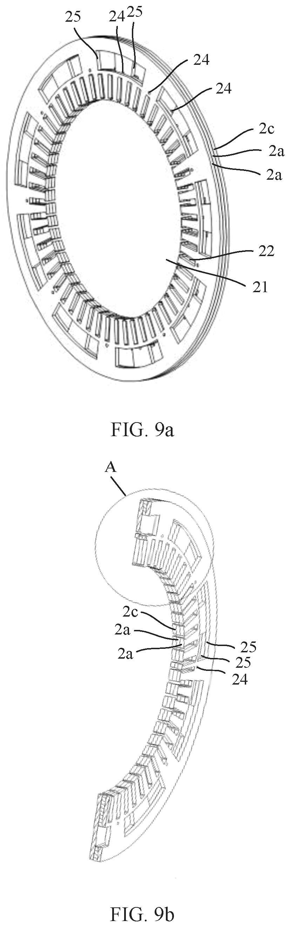

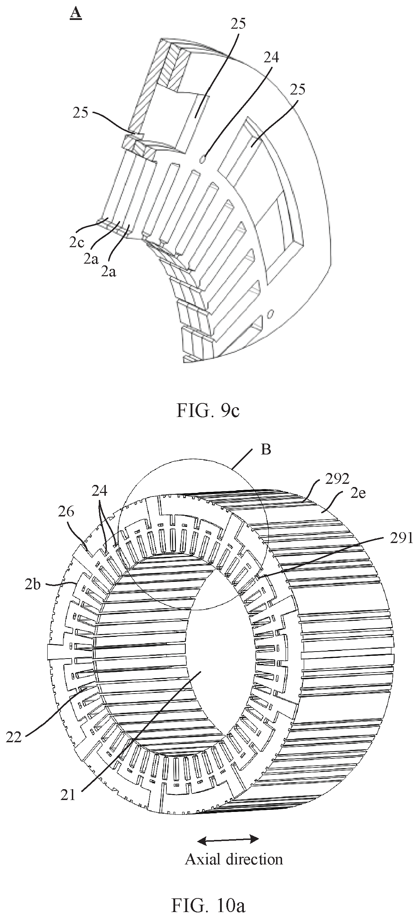

FIG. 9a shows a structure in which the two stator laminations 2a and the first lamination 2c are arranged in the axial direction of the stator 10. FIG. 9b shows a cross-sectional structure of the two stator laminations 2a and the first lamination 2c. FIG. 9c is an enlarged view of A in FIG. 9b. Refer to FIG. 9a to FIG. 9c together. A communication hole 24 of the first lamination 2c is in communication with communication holes 24 of the two stator laminations 2a, or a communication hole 24 of the first lamination 2c is in communication with a circumferential channel formed by the through holes 25 of the two stator laminations 2a.

FIG. 10a shows a structure in which the stator lamination 2b and the third lamination 2e are adjacently arranged. As shown in FIG. 10a, in the radial direction of the stator 10, an outer diameter of the stator lamination 2b is basically aligned with an outer diameter of the third lamination 2e, and a distance between a bottom of the groove 26 and a center hole 21 is less than a distance between an outer surface of the third lamination 2e and the center hole 21. In the axial direction of the stator 10, the external cooling holes 292 of the third lamination 2e are in communication with one groove 26 of the stator lamination 2b. In the circumferential direction of the stator 10, a size of the groove 26 is greater than a sum of sizes of the plurality of external cooling holes 292 and a size of a spacing between any two external cooling holes 292. In the axial direction of the stator 10, an orthographic projection of at least one external cooling hole 292 of the third lamination 2e on the stator lamination 2b falls within one groove 26.

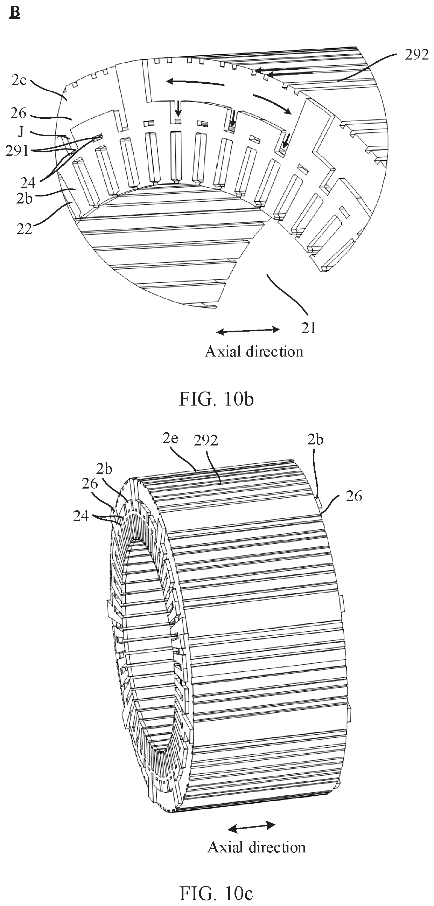

Further, refer to an enlarged view, shown in FIG. 10b, of B in FIG. 10a. The stator lamination 2b and the third lamination 2e are adjacently arranged in the axial direction of the stator 10, and the plurality of communication holes 24 of the stator lamination 2b are respectively in communication with the plurality of internal cooling holes 291 of the third lamination 2e to form an inner-layer liquid cooling channel of the stator 10. The plurality of internal cooling holes 291 of the third lamination 2e are respectively in communication with the plurality of communication holes 24 of the stator lamination 2b in the axial direction of the stator 10. The external cooling holes 292 of the third lamination 2e are a portion of an outer-layer liquid cooling channel of the stator 10, and the external cooling holes 292 may be in communication with a portion of the communication holes 24 of the stator lamination 2b through the groove 26, so that the inner-layer liquid cooling channel and the outer-layer liquid cooling channel of the stator 10 can be in communication with each other. As shown in FIG. 10b, after flowing into the groove 26 in the axial direction of the stator 10, the cooling medium in the external cooling hole 292 may flow in the circumferential direction of the stator 10, then flow into the communication hole 24 through the radial flow channel J, and enter the internal cooling hole 291 of the third lamination 2e through the communication hole 24.

In an example in FIG. 10b, in the circumferential direction of the stator 10, a communication hole 24 that is in communication with the groove 26 and a communication hole 24 that is not in communication with the groove 26 are alternately arranged. That is, in any two communication holes 24 that are adjacent to each other in the circumferential direction of the stator 10, one communication hole 24 can be in communication with the groove 26, and the other communication hole 24 cannot be in communication with the groove 26.

FIG. 10c shows a structure of the third lamination 2e and two stator laminations 2b. In the axial direction of the stator 10, the two stator laminations 2b are respectively arranged at two ends of the third lamination 2e. In the axial direction of the stator 10, a plurality of grooves 26 of the two stator laminations 2b are in respective correspondence, and orthographic projections of the plurality of grooves 26 of one stator lamination 2b on the other stator lamination 2b overlap the plurality of grooves 26 on the other stator lamination 2b. The cooling medium in the external cooling hole 292 of the third lamination 2e may flow, in the axial direction of the stator 10, to the two stator laminations 2b at the two ends of the third lamination 2e, enter the communication holes 24 through the grooves 26 on the stator laminations 2b, and further enter the internal cooling hole 291 of the third lamination 2e.

Refer to FIG. 10b and FIG. 10c together. A portion of the communication holes 24 may be in communication with the external cooling holes 292 of the third lamination 2e through the groove 26, while another portion of the communication holes 24 cannot be in communication with the external cooling holes 292 of the third lamination 2e through the groove 26. When the third lamination 2e and the two stator laminations 2b are arranged, the two stator laminations 2b may be rotated by a specific angle relative to each other in the circumferential direction of the stator 10, so that a portion of the internal cooling holes 291 of the third lamination 2e are in communication with a portion of the external cooling holes 292 through the groove 26 of one stator laminations 2b, another portion of the internal cooling holes 291 of the third lamination 2e are in communication with another portion of the external cooling holes 292 through the groove 26 of the other stator lamination 2b.

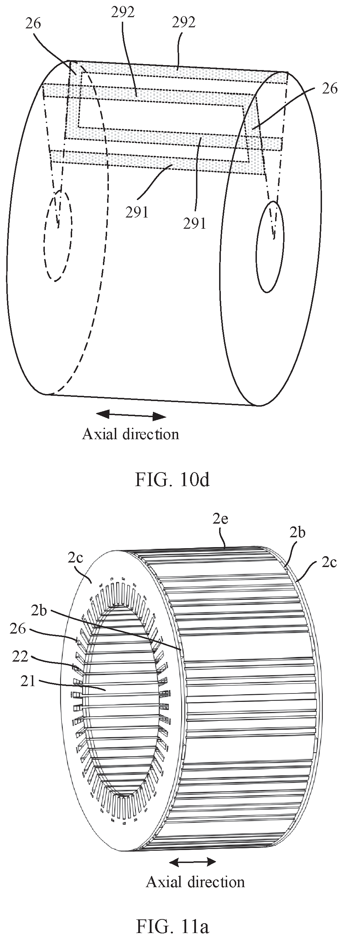

FIG. 10d simply shows an example of at least two channels that are formed after the two stator laminations 2b are arranged in a staggered manner in the circumferential direction of the stator 10 and that are used for the cooling medium to flow through. Specifically, in the circumferential direction of the stator 10, in two adjacent internal cooling holes 291 of the same third lamination 2e, one internal cooling hole 291 is in communication with the external cooling hole 292 through the groove 26 of one stator lamination 2b, and the other internal cooling hole 291 is not in communication with the external cooling hole 292 through the groove 26 of one stator lamination 2b. In the axial direction of the stator 10, one end of a same external cooling hole 292 is in communication with the internal cooling hole 291 through the groove 26 of one stator lamination 2b, and the other end of the external cooling hole 292 is not in communication with the internal cooling hole 291 of the other stator lamination 2b, thereby forming a U-shaped flow channel in FIG. 10d. In the circumferential direction of the stator 10, U-shaped flow channels corresponding to any two adjacent internal cooling holes 291 face in opposite directions in the axial direction of the stator 10.

FIG. 11a shows a structure of a third lamination 2e, two stator laminations 2b, and two first laminations 2c. One stator lamination 2b and one first lamination 2c are sequentially arranged at an end portion of the third lamination 2e in the axial direction of the stator 10, and the stator lamination 2b is arranged between the third lamination 2e and the first lamination 2c. A quantity of flow holes 27 of the first lamination 2c is less than a quantity of communication holes 24 of the stator lamination 2b. During arrangement, an angle of the first lamination 2c relative to the stator lamination 2b may be adjusted, so that some flow holes 27 of the first lamination 2c are in communication with the communication holes 24 that are of the stator lamination 2b and that are in communication with the groove 26, and some other flow holes 27 of the first lamination 2c are in communication with the communication holes 24 that are of the stator lamination 2b and that are isolated from the groove 26.

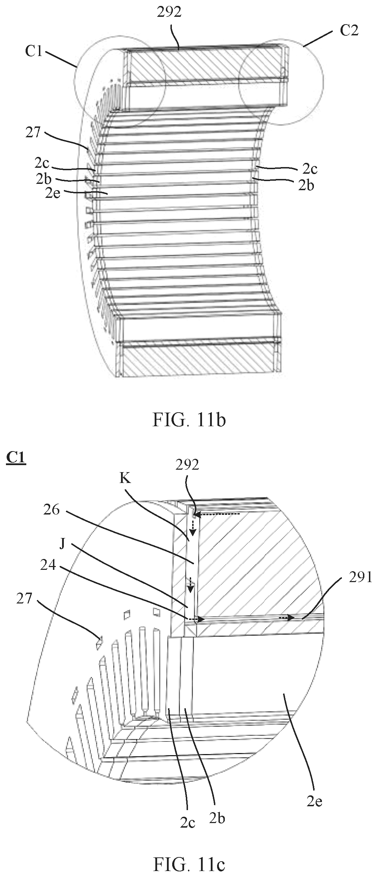

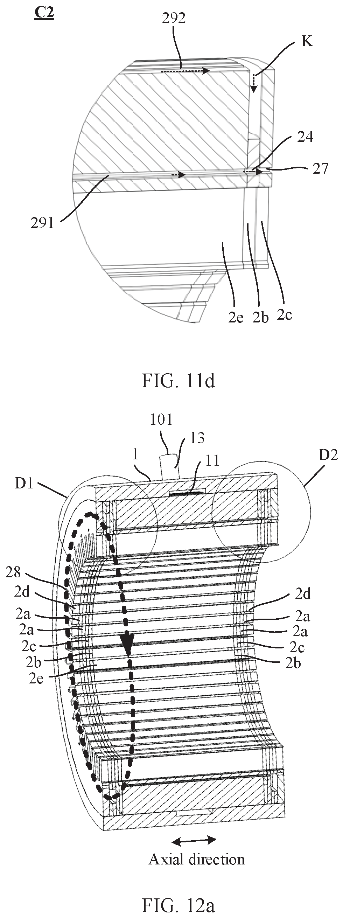

FIG. 11b shows a cross-sectional structure of the structure shown in FIG. 11a. In the radial direction of the stator 10, taking one external cooling hole 292 and one internal cooling hole 291 of the third lamination 2e as an example, FIG. 11c shows an enlarged view of details at C1 in FIG. 11b, and FIG. 11d shows an enlarged view of details at C2 in FIG. 11b.

Refer to FIG. 11b and FIG. 11c together. The third lamination 2e, the stator lamination 2b, and the first lamination 2c at C1 in FIG. 11b are adjacently arranged in the axial direction of the stator 10. The first lamination 2c and the third lamination 2e are opposite to each other in the axial direction of the stator 10. Space K that is in communication with the external cooling hole 292 is formed between the groove 26 of the stator lamination 2b, a side surface that is of the first lamination 2c and that faces the stator lamination 2b, and a side surface that is of the third lamination 2e and that faces the first lamination 2c. The space K may be regarded as a circumferential liquid cooling channel. The communication hole 24 of the stator lamination 2b is in communication with the internal cooling hole 291 of the third lamination 2e in the axial direction of the stator 10, and the radial flow channel J of the stator lamination 2b can communicate the space K with the communication hole 24 of the stator lamination 2b, so that the external cooling hole 292 of the third lamination 2e is in communication with the internal cooling hole 291 through the stator lamination 2b. The first lamination 2c blocks the groove 26 of the stator lamination 2b and the internal cooling hole 291 shown in FIG. 11c in the axial direction of the stator 10. As shown by arrows in FIG. 11c, after the cooling medium is injected into the external cooling hole 292, the cooling medium flows in the axial direction of the stator 10 to the space K between the third lamination 2e and the first lamination 2c, and then flows in the circumferential direction of the stator 10. The cooling medium in the space K enters the internal cooling hole 291 of the third lamination 2e along the groove 26 and the communication hole 24 of the stator lamination 2b, so that the external cooling hole 292 of the third lamination 2e is in communication with the internal cooling hole 291.

Refer to FIG. 11b and FIG. 11d together. The third lamination 2e, the stator lamination 2b, and the first lamination 2c at C2 in FIG. 11b are adjacently arranged in the axial direction of the stator 10. The first lamination 2c and the third lamination 2e are opposite to each other in the axial direction of the stator 10. Space K that is in communication with the external cooling hole 292 is formed between the groove 26 of the stator lamination 2b, a side surface that is of the first lamination 2c and that faces the stator lamination 2b, and a side surface that is of the third lamination 2e and that faces the first lamination 2c. The space K is also space formed by the groove 26 of the stator lamination 2b. The flow hole 27 of the first lamination 2c, the communication hole 24 of the stator lamination 2b, and the internal cooling hole 291 of the third lamination 2e are sequentially in communication with each other in the axial direction of the stator 10. As shown by arrows in FIG. 11d, after the cooling medium is injected into the external cooling hole 292, the cooling medium flows in the axial direction of the stator 10 to the space K between the third lamination 2e and the first lamination 2c, and then flows in the circumferential direction of the stator 10. The cooling medium in the internal cooling hole 291 of the third lamination 2e flows in the axial direction of the stator 10 to the communication hole 24 of the stator lamination 2b, and flows out from the flow hole 27 of the first lamination 2c.

It should be understood that, in the axial direction of the stator 10, a cooling medium flow manner shown in FIG. 11c is equivalent to a side that is of a U-shaped flow channel in FIG. 10d and that has the groove 26, and a cooling medium flow manner shown in FIG. 11d is equivalent to a side that is of a U-shaped flow channel in FIG. 10d and that has no groove 26.

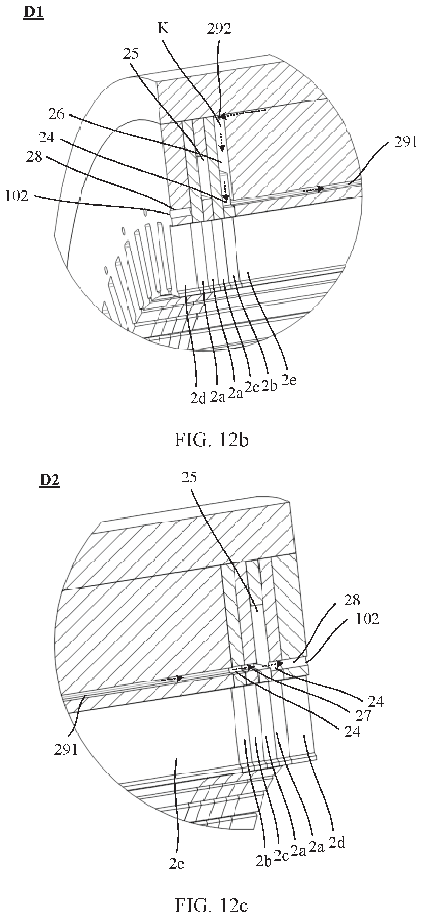

FIG. 12a shows a cross-sectional structure of the stator 10 according to an embodiment of this application. As shown in FIG. 12a, in the axial direction of the stator 10, a stator lamination 2b, a first lamination 2c, two third lamination 2e, and a second lamination 2d are adjacently arranged at two ends of a third lamination 2e. For a structure of each lamination 2, refer to FIG. 7b to FIG. 11d. In the radial direction of the stator 10, FIG. 12b shows an enlarged view at D1 in FIG. 12a, and FIG. 12c shows an enlarged view at D2 in FIG. 12a.

Refer to FIG. 12a and FIG. 12b together, after the cooling medium is injected through the liquid inlet 101, a circumferential channel 11 of the housing 1 delivers the cooling medium to the plurality of external cooling holes 292 on the outer circumferential surface of the third lamination 2e. The cooling medium in the external cooling hole 292 flows in the axial direction of the stator 10 to the space K between the third lamination 2e and the first lamination 2c, and then flows in the circumferential direction of the stator 10. The cooling medium in the space K enters the internal cooling hole 291 of the third lamination 2e along the groove 26 and the communication hole 24 of the stator lamination 2b, and flows in the axial direction of the stator 10 to the other end of the stator 10.

Refer to FIG. 12c and FIG. 12c together. The cooling medium in the internal cooling hole 291 of the third lamination 2e flows in the axial direction of the stator 10, passing through the communication hole 24 of the stator lamination 2b, the flow hole 27 of the first lamination 2c, the through hole 25 of one stator lamination 2a, the communication hole 24 of the other stator lamination 2a, and the liquid outlet hole 28 of the second lamination 2d, before finally flowing out from the liquid outlet 102. The cooling medium flowing out from the liquid outlet 102 can be sprayed onto the end winding of the stator winding 20, to cool down the end winding.

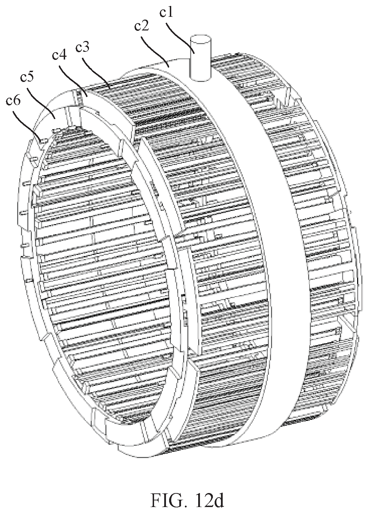

With reference to FIG. 12a to FIG. 12c, FIG. 12d shows an example of a structure of a simulation model of a channel formed by the stator 10 for the cooling medium to flow. As shown in FIG. 12d, a channel c1, formed by the liquid inlet pipe 13 on the housing 1, is configured to communicate the liquid inlet 101 with the circumferential channel 11. A channel c2, formed by the circumferential channel 11 of the housing 1, is in an annular shape, and is configured to communicate the liquid inlet pipe 13 with the plurality of external cooling holes 292 on the outer circumferential surface of the third lamination 2e. A channel c3 is formed by the external cooling holes 292, there are a plurality of external cooling holes 292, and the plurality of external cooling holes 292 are spaced apart in the circumferential direction of the stator 10. A channel c4 is formed by the third lamination 2e, the first lamination 2c, and the stator lamination 2b, that is, the space K between the third lamination 2e and the first lamination 2c, and each channel c4 is in communication with a plurality of channels c3. A channel c6 is formed by the liquid outlet holes 28 of the second lamination 2d. The through holes 25 of the two stator laminations 2a are staggered to form a channel c5, and the channel c5 is configured to communicate a plurality of channels c6 with a plurality of channels c4. In this embodiment of this application, the through holes 25 of the two stator laminations 2a are staggered to form the channel c5, so that the cooling medium can flow in the circumferential direction of the stator 10 for supply to the plurality of liquid outlets 102. In a specific design, a quantity, a shape, and distribution of the liquid outlet 102 may be adjusted based on a product requirement, to meet liquid cooling requirements of end windings at different angles and in different directions.

In conclusion, the stator 10 of the motor 100 provided in this embodiment of this application does not need a structure of an oil spraying ring, and the cooling medium can be sprayed onto the end winding at the axial end portion of the stator 10 through a cooling channel of the stator 10. The two stator laminations 2a are offset in the circumferential direction of the stator 10, so that the plurality of through holes 25 of the two stator laminations 2a can be sequentially in communication with each other to form a circumferentially continuous channel, and the cooling medium can flow in the circumferential direction of the stator 10 and be sprayed out from at least two adjacent liquid outlets 102. The two stator laminations 2a are close to the axial end portion of the stator 10, and distribution of the liquid outlets 102 is set. In this way, non-uniform oil injection can be implemented at the end portion of the stator 10, thereby implementing efficient cooling of the end winding and achieving a good liquid cooling heat dissipation effect. In some embodiments, compared with conventional oil cooling heat dissipation, in this embodiment of this application, the stator 10 of the motor 100 has a lower temperature and a better heat dissipation effect. The oil spraying ring is removed from the structure, to further reduce costs of the motor 100, and achieve an effect of reducing costs and improving efficiency.

It is clear that a person skilled in the art can make various modifications and variations to this application without departing from the scope of this application. In this way, this application is intended to cover these modifications and variations of this application provided that they fall within the scope defined by the claims of this application and equivalent technologies thereof.

## Claims

1. A stator lamination having circumferential flow channels, wherein the stator lamination comprises a plurality of communication holes and a plurality of circumferential flow channels;
in a circumferential direction of the stator lamination, each communication hole and each circumferential flow channel run through the stator lamination;
in the circumferential direction of the stator lamination, the plurality of communication holes are spaced apart, the plurality of circumferential flow channels are spaced apart, and each circumferential flow channel is in communication with at least two communication holes; and
in a radial direction of the stator lamination, a distance between a center of the circumferential flow channel and a center of the stator lamination is greater than a distance between a center of the communication hole and the center of the stator lamination.

2. The stator lamination according to claim 1, wherein the stator lamination comprises a groove that runs through the stator lamination in the circumferential direction of the stator lamination, and an outer circumferential surface of the stator lamination comprises an opening of the groove; and
in the radial direction of the stator lamination, a bottom of the groove is in communication with at least two communication holes, and the groove is the circumferential flow channel.

3. The stator lamination according to claim 2, wherein in the circumferential direction of the stator lamination, one communication hole is in communication with the bottom of the groove, and another communication hole adjacent to the communication hole is isolated from the groove.

4. The stator lamination according to claim 3, wherein in the radial direction of the stator lamination, a distance between the communication hole and the bottom of the groove is greater than a size of the communication hole.

5. The stator lamination according to any one of claims 1 to 4, wherein in the circumferential direction of the stator lamination, a size of the circumferential flow channel is greater than a size of the communication hole.

6. The stator lamination according to any one of claims 1 to 5, wherein in the radial direction of the stator lamination, a size of the circumferential flow channel is greater than the size of the communication hole.

7. A motor, wherein a stator of the motor comprises a first lamination and at least one stator lamination according to any one of claims 1 to 6;
the first lamination comprises a plurality of flow holes, each flow hole runs through the first lamination in the circumferential direction of the stator lamination, and the plurality of flow holes are spaced apart in a circumferential direction of the stator; and
in an axial direction of the stator, the first lamination and the stator lamination are adjacently arranged, and the flow hole is in communication with the circumferential flow channel or the communication hole.

8. The motor according to claim 7, wherein in the axial direction of the stator, the first lamination is arranged between two first laminations;
a circumferential flow channel of one stator lamination is a groove, and an outer circumferential surface of the stator lamination comprises an opening of the groove; and
a circumferential flow channel of the other stator lamination is a through hole, and in the circumferential direction of the stator, a size of the through hole is greater than the size of the communication hole.

9. The motor according to claim 7 or 8, wherein there are two stator laminations, and the two stator laminations are adjacently arranged in the axial direction of the stator;
in the axial direction of the stator, a circumferential flow channel of one stator lamination is in communication with a circumferential flow channel of the other adjacent stator lamination, and a communication hole of the one stator lamination is in communication with a circumferential flow channel of the other adjacent stator lamination; and
in the circumferential direction of the stator, a structure between two adjacent circumferential flow channels of the one stator lamination partially blocks a circumferential flow channel of the other adjacent stator lamination.

10. The motor according to claim 8 or 9, wherein the stator comprises at least one second lamination, the second lamination comprises a plurality of liquid outlet holes, each liquid outlet hole runs through the second lamination in the axial direction of the stator, and the plurality of liquid outlet holes are spaced apart in the circumferential direction of the stator; and
in the axial direction of the stator, the second lamination is arranged on a side that is of the other stator lamination and that is away from the first lamination, and the circumferential flow channel is in communication with at least two liquid outlet holes that are adjacent to each other in the circumferential direction of the stator.

11. The motor according to any one of claims 8 to 10, wherein the stator comprises at least one third lamination, and the third lamination comprises a plurality of internal cooling holes and a plurality of external cooling holes;
in the circumferential direction of the stator, the plurality of internal cooling holes are spaced apart, and the plurality of external cooling holes are spaced apart;
in a radial direction of the stator, a distance between the internal cooling hole and a center of the stator is less than a distance between the external cooling hole and a center of the third lamination; and
in the axial direction of the stator, the third lamination is arranged on a side that is of the one stator lamination and that is away from the first lamination, the external cooling hole is in communication with the circumferential flow channel, and the internal cooling hole is in communication with the communication hole.

12. The motor according to claim 11, wherein a quantity of the external cooling holes is greater than a quantity of the circumferential flow channels.

13. The motor according to claim 11 or 12, wherein in the radial direction of the stator, the external cooling hole is in communication with an outer circumferential surface of the third lamination.

14. A powertrain, comprising one of a reducer or a transmission and the motor according to any one of claims 7 to 13, wherein
the motor comprises an output shaft, a rotor, and a stator, the stator is sleeved outside the rotor, the output shaft is coaxially connected to the rotor, and the output shaft is in transmission connection to an input shaft of the reducer or an input shaft of the transmission.

15. An electric vehicle, comprising wheels, a transmission mechanism, and the powertrain according to claim 14, wherein the powertrain drives the wheels through the transmission mechanism.
